# FASCICULE DE BREVET EUROPEEN

(11) **EP 0 805 341 B1**
(45) Date de publication et mention de la délivrance du brevet: **11.09.2002**
(21) Numéro de dépôt: 97201176.1
(22) Date de dépôt: 22.04.1997
(51) Int. Cl.: G01F 1/32, F15C 1/22

(54) **Dispositif de mesure du débit d'un fluide en écoulement à élément(s) modificateur(s) du profil de vitesses dudit écoulement**
Vorrichtung zum Durchflussmessen eines strömenden Fluids mit einem oder mehreren Elementen zur Modifizierung des Strömungsgeschwindigkeitsprofils
Device for the flowrate measurement of a flowing fluid with one or more elements modifying the velocity profile of the flow

(30) Priorité: 30.04.1996 FR 9605445
(43) Date de publication de la demande: 05.11.1997
(73) Titulaire: SCHLUMBERGER INDUSTRIES S.A., 92120 Montrouge (FR)
(72) Inventeur: Guizot, Jean-Luc, 94220 Charenton le Pont (FR); Parry, Andrew John, 92340 Bourg la Reine (FR)
(74) Mandataire: Feray, Valérie

(56) Documents cités:
- EP-A- 0 208 174
- EP-A- 0 306 193
- FR-A- 2 664 046

## Description

La présente invention est relative à un dispositif de mesure du débit d'un fluide en écoulement comprenant un oscillateur fluidique muni d'une fente allongée suivant une direction Oz et apte à former un jet de fluide oscillant dans un plan Oxy perpendiculaire à cette direction ainsi que des moyens de modification de la distribution des vitesses dans l'écoulement.

Il est connu depuis de nombreuses années d'utiliser un oscillateur fluidique pour mesurer le débit d'un fluide en écoulement.
On connaît d'après le document FR 2 663 417 un dispositif de mesure d'un débit de fluide en écoulement qui utilise un oscillateur fluidique. Le dispositif ainsi décrit comprend d'amont en aval, une toile métallique destinée à modifier la distribution des vitesses dans l'écoulement de fluide et une fente allongée suivant une direction Oz et apte à former un jet de fluide oscillant dans un plan Oxy perpendiculaire à cette direction à l'intérieur d'une chambre dite d'oscillation.
La chambre d'oscillation comprend plusieurs obstacles dont un situé en regard de la fente et deux obstacles latéraux servant à définir des écoulements de recirculation centrés sur ces obstacles et qui permettent de faire basculer le jet de fluide d'un obstacle latéral à l'autre. Le jet de fluide adopte ainsi un mouvement dit d'oscillation qui s'effectue à une fréquence représentative du débit du fluide.
La détection de la fréquence d'oscillation du jet est réalisée, par exemple, au moyen de prises de pression situées aux points extrêmes du balayage du jet de fluide, et qui sont reliées à des systèmes électroniques connus.
Par un étalonnage préalable la fréquence d'oscillation du jet est reliée au débit du fluide.
Le dispositif de mesure présente des courbes d'erreur en fonction du débit acceptables compte tenu des applications envisagées.
Cependant, la Demanderesse s'est aperçue qu'en présence de fluides véhiculant des impuretés (particules, poussières,...), tels que les gaz, les impuretés peuvent s'accumuler dans les ouvertures de la toile métallique ce qui perturbe la distribution des vitesses dans l'écoulement entre ladite toile et la fente de l'oscillateur fluidique.
Ce phénomène risque donc de dégrader assez rapidement les performances du dispositif de mesure et, après quelques années de fonctionnement du dispositif les ouvertures peuvent être totalement obstruées, rendant alors impraticable toute mesure de débit.
Ces problèmes de contamination sont d'ailleurs plus accentués lorsque le fluide utilisé est de l'eau chaude.
Il serait donc intéressant d'obtenir un dispositif de mesure d'un débit de fluide en écoulement utilisant un oscillateur fluidique et s'affranchissant des problèmes de contamination qui peuvent survenir lorsque le fluide véhicule des quantités importantes d'impuretés.

La présente invention propose comme solution à ce problème un dispositif de mesure du débit d'un fluide en écoulement comprenant un oscillateur fluidique muni d'une fente allongée suivant une direction Oz et apte à former un jet de fluide oscillant dans un plan Oxy perpendiculaire à cette direction et, en amont de la fente, des moyens de modification de la distribution de vitesses dans l'écoulement, caractérisé en ce que lesdits moyens comprennent au moins un élément formant obstacle à l'écoulement au moins dans sa partie centrale et se présentant sous la forme d'une plaque sensiblement plane.
En effet, le (ou les) élément(s) en forme de plaque(s) sensiblement plane(s) disposé(s) dans l'écoulement en vue de modifier son profil de vitesses ne présente(nt) pas d'anfractuosités ou d'ouvertures dans lesquelles les particules diverses véhiculées par ledit écoulement peuvent s'accumuler et finir par obstruer le passage de l'écoulement.
En disposant une (ou plusieurs) plaque(s) plane(s) qui forment au moins obstacle à l'écoulement dans sa partie centrale, la vitesse de l'écoulement au centre de celui-ci est réduite, l'énergie contenue dans le jet de fluide qui va se former est augmentée contribuant ainsi à améliorer la linéarité de l'oscillateur fluidique.
Il convient en outre de souligner que le document de l'art antérieur FR 2 663 417 dissuade l'homme du métier de disposer un obstacle dans l'écoulement en amont de la fente de l'oscillateur fluidique afin d'éviter la formation d'écoulements tourbillonnaires qui risquent de perturber le phénomène d'oscillation du jet.

Selon une caractéristique de l'invention, la plaque est sensiblement perpendiculaire au plan Oxy.

Selon une autre caractéristique de l'invention, le fluide s'écoule dans une direction Ox au droit de ladite fente et l'élément formant obstacle à l'écoulement est symétrique par rapport au plan Oxz.

Lorsque le fluide s'écoule dans une direction Ox au droit de ladite fente et que l'élément formant obstacle à l'écoulement est sensiblement perpendiculaire au plan Oxy et dissymétrique par rapport au plan Oxz, la Demanderesse s'est aperçue que la vitesse de l'écoulement au centre de celui-ci suivant la direction Oz est davantage réduite qu'avec un élément symétrique par rapport au plan Oxz.

Selon une forme de réalisation de l'invention, le dispositif comprend des parois latérales sensiblement perpendiculaires au plan Oxy, symétriques par rapport au plan Oxz et qui guident l'écoulement jusqu'à la fente.

Le(s) élément(s) formant obstacle(s) à l'écoulement peu(ven)t être assujetti(s) à au moins une des parois latérales du dispositif ou écarté(s) des parois latérales du dispositif.

Dans ce dernier cas l'élément formant obstacle à l'écoulement est solidaire d'un support qui est disposé dans l'écoulement de fluide.

Le support forme par exemple un conditionneur d'écoulement pour ledit dispositif et ce conditionneur fractionne l'écoulement en deux écoulements dits fractionnés qui se rejoignent dans une zone située sensiblement dans le plan Oxz en amont de la fente .

Le(s) élément(s) formant obstacle à l'écoulement est(sont) disposé(s) dans ladite zone et/ou réparti(s) sur le passage de chaque écoulement fractionné.

Selon une caractéristique de l'invention, le (ou les) élément(s) formant obstacle à l'écoulement a (ont) une extension totale suivant l'axe Oz qui est inférieure à la dimension locale suivant cette même direction du dispositif, de manière à laisser libre pour l'écoulement un espace de part et d'autre dudit (ou desdits) élément(s) dans cette direction

Selon une autre caractéristique de l'invention, le (ou les) élément(s) formant obstacle à l'écoulement possède(nt) une extension suivant une direction contenue dans le plan Oxy qui est d'autant plus grande que l'angle formé par le(s)dit(s) élément(s) avec la direction locale de l'écoulement est faible.

Les moyens de modification de la distribution de vitesses peuvent comprendre plusieurs éléments formant obstacle à l'écoulement et qui sont distribués le long de la direction Oz.

Plus particulièrement, les éléments consécutifs sont décalés angulairement l'un par rapport à l'autre .

Selon une caractéristique de l'invention, les éléments qui sont situés dans la partie centrale de l'écoulement suivant la direction Oz, appelés éléments centraux, ont une extension suivant une direction contenue dans le plan Oxy qui est plus grande que celle des éléments situés de part et d'autre des éléments centraux suivant la direction Oz .

Les éléments ont par exemple tous une même extension suivant une direction contenue dans le plan Oxy .

Les moyens de modification de la distribution de vitesses peuvent également ne comprendre qu'un seul élément formant obstacle à l'écoulement et qui possède une extension suivant une direction contenue dans le plan Oxy qui est plus grande dans sa partie centrale que de part et d'autre de celle-ci dans la direction Oz.

L'élément en forme de plaque peut être sensiblement perpendiculaire au plan Oxz.
Dans ce cas de figure, la plaque peut former avec le plan Oxy un angle qui est d'autant plus grand que la surface de ladite plaque que rencontre l'écoulement de fluide est faible.

Il est possible d'utiliser le dispositif selon l'invention pour tout type de fluide tels que des gaz et des liquides, notamment de l'eau chaude. Pour l'eau chaude, le problème de la contamination par des impuretés véhiculées par l'écoulement est d'ailleurs encore plus crucial que pour les gaz.
L'invention s'applique également aux carburants pour véhicules de locomotion.

D'autres caractéristiques et avantages apparaîtront au cours de la description qui va suivre donnée à titre d'exemple illustratif, faite en référence aux dessins annexés et sur lesquels :
- la figure 1 est une vue de dessus d'un dispositif de mesure selon un premier mode de réalisation de l'invention,
- la figure 2a est une vue en perspective de l'élément représenté à la figure 1 et qui forme obstacle à l'écoulement,
- la figure 2b est une vue en perspective d'une première variante de l'élément représenté en perspective à la figure 2a,
- la figure 2c représente une courbe d'erreur E en fonction du nombre de Reynolds obtenu avec le dispositif de mesure de la figure 1 au droit de la fente 14,
- la figure 3a est une vue en perspective d'une deuxième variante de la figure 2a et qui représente plusieurs éléments formant obstacle à l'écoulement,
- la figure 3b représente une courbe d'erreur E en fonction du nombre de Reynolds obtenu au droit de la fente 14 avec le dispositif de mesure de la figure 1 dans lequel l'élément de la figure 2a a été remplacé par les éléments de la figure 3a,
- la figure 4a est une vue en perspective d'une troisième variante de la figure 2a et qui représente plusieurs éléments formant obstacle à l'écoulement,
- la figure 4b représente une courbe d'erreur E en fonction du nombre de Reynolds obtenu au droit de la fente 14 avec le dispositif de mesure de la figure 1 dans lequel l'élément de la figure 2a a été remplacé par les éléments de la figure 4a,
- la figure 5a est une vue en perspective d'une quatrième variante de la figure 2a et qui représente plusieurs éléments formant obstacle à l'écoulement,
- la figure 5b est une vue de dessus des éléments de la figure 5a,
- la figure 5c est une vue de côté des éléments de la figure 5a,
- la figure 5d est une vue en perspective d'une variante des éléments de la figure 5a,
- la figure 6a est une vue de dessus d'un dispositif de mesure selon un deuxième mode de réalisation de l'invention,
- la figure 6b représente deux courbes d'erreur en fonction du débit obtenu avec le dispositif de mesure de la figure 6a, l'une avec les éléments Cᵢ et l'autre sans ces éléments,
- les figures 6c à 6h représentent les différents profils de la distribution de vitesses dans l'écoulement au droit de la fente selon la direction Oz, obtenus avec le dispositif de mesure de la figure 6a respectivement pour les nombres de Reynolds 60, 150, 400, 1000, 10000 et 100000,
- la figure 7a est une vue en perspective d'un dispositif de mesure selon un troisième mode de réalisation de l'invention,
- la figure 7b est une vue de dessus du dispositif représenté à la figure 7a,
- la figure 8a est une vue en perspective d'un dispositif de mesure selon un quatrième mode de réalisation de l'invention,
- la figure 8b est une vue partielle de côté du dispositif de la figure 8a,
- la figure 8c est une vue partielle en perspective d'une variante de réalisation du dispositif de la figure 8a sous un angle différent de celui de cette figure,
- la figure 8d est une vue partielle de côté d'une autre variante de réalisation du dispositif de la figure 8a,
- la figure 9 est une vue de dessus d'un autre oscillateur fluidique utilisé dans un dispositif de mesure selon l'invention.

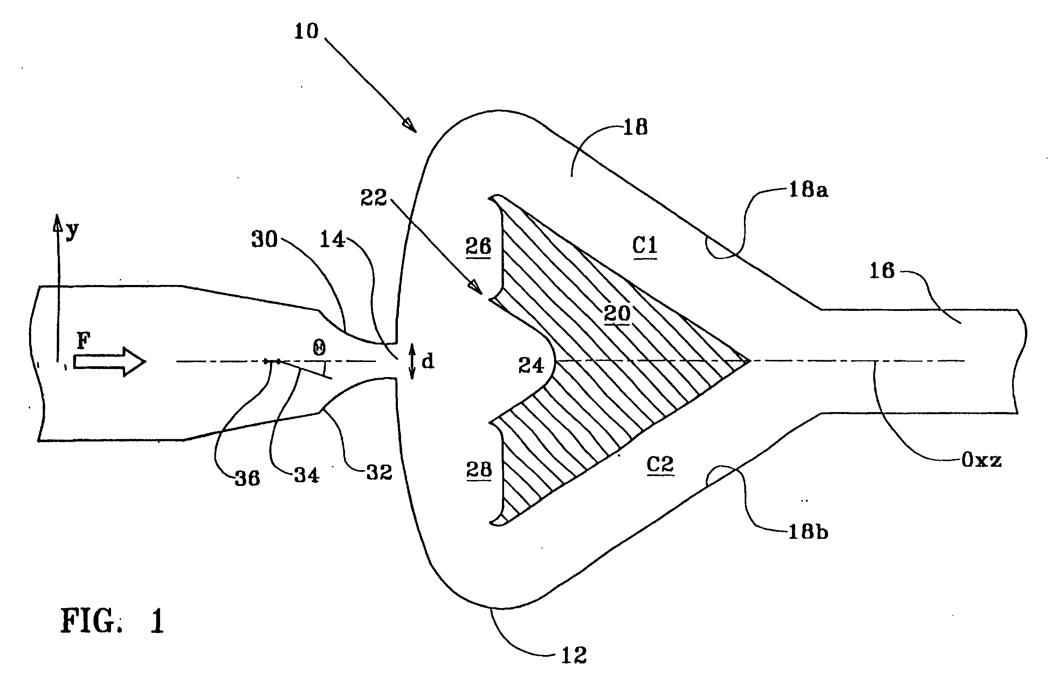

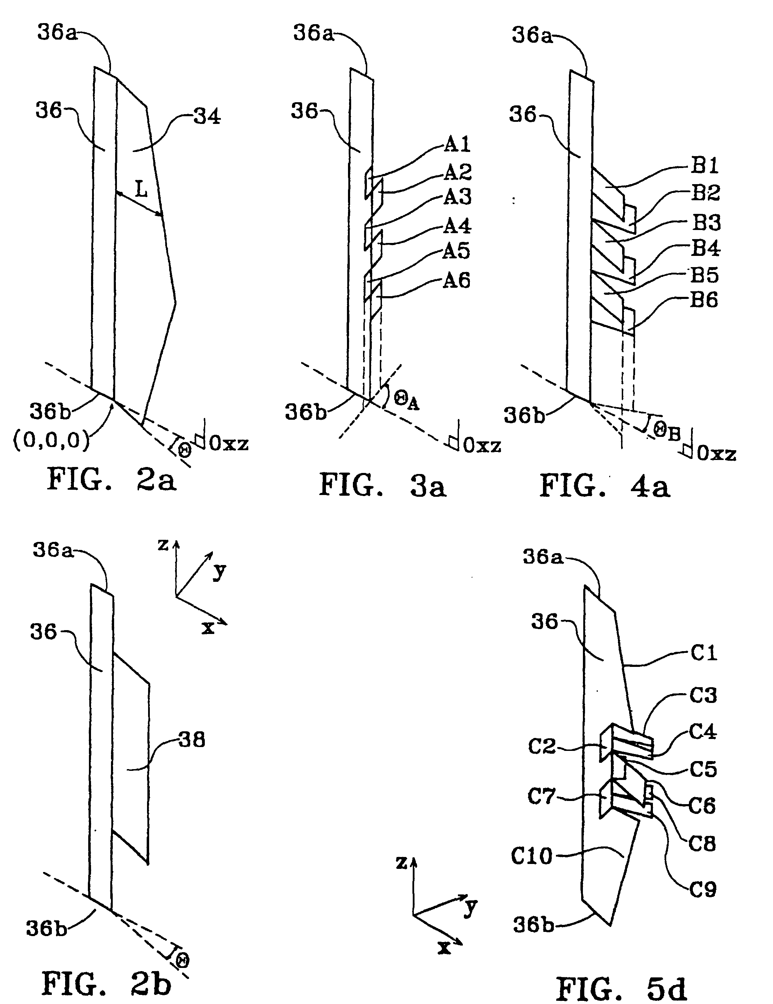

Comme représenté à la figure 1 et désigné par la référence générale notée 10, un dispositif de mesure d'un débit de gaz en écoulement comprend un oscillateur fluidique 12 ayant fait l'objet du brevet FR 2 690 717.
Le dispositif de mesure 10 est symétrique par rapport à un plan de symétrie longitudinal Oxz suivant lequel sont alignées une entrée 14 et une sortie 16 pour l'écoulement de gaz.
L'entrée 14 est réalisée sous la forme d'une fente de dimension transversale, ou largueur, constante d et qui est allongée suivant la direction Oz perpendiculaire au plan de la figure 1.
Cette fente transforme l'écoulement de gaz qui la traverse et qui est repéré par la flèche F en un jet de fluide bidimensionnel (le jet de fluide reste à peu près le même suivant la direction Oz) qui oscille transversalement par rapport au plan de symétrie longitudinal Oxz dans un plan Oxy.
L'oscillateur fluidique 12 comprend une chambre dite d'oscillation 18 dans laquelle débouche le jet de gaz par la fente 14 et au milieu de laquelle est positionné un obstacle 20 qui occupe la majeure partie de cette chambre.
La chambre d'oscillation 18 définit par ses parois latérales 18a et 18b avec les parois de l'obstacle 20 deux canaux C1 et C2 qui permettent à l'écoulement de gaz de s'échapper alternativement par l'un ou l'autre canal vers la sortie 16 de l'oscillateur fluidique.
L'obstacle 20 possède une paroi frontale 22 en regard de la fente 14 et dans laquelle est pratiquée une cavité 24 située en vis-à-vis de ladite fente et qui est balayée par le jet de gaz au cours de son mouvement d'oscillation.
Le jet se sépare en deux écoulements après avoir heurté la cavité.
La paroi frontale 22 de l'obstacle 20 comporte, de part et d'autre de la cavité 24 dite centrale, deux cavités secondaires 26 et 28 qui ont pour fonction de rendre l'extension radiale des tourbillons créés durant le phénomène d'oscillation du jet dépendante du régime d'écoulement, comme décrit dans le brevet FR 2 690 717.
En amont de la fente 14 le dispositif 10 comprend deux parois latérales 30 et 32, symétriques par rapport au plan de symétrie longitudinal Oxz, perpendiculaires au plan Oxy et qui guident l'écoulement de gaz jusqu'à la fente 14.
Le dispositif de mesure selon l'invention comprend également des moyens 34 de modification de la distribution de vitesses dans l'écoulement qui sont placés en amont de la fente 14.
Ces moyens comprennent un élément en forme de plaque sensiblement plane, placé dans l'écoulement de gaz, et qui a pour fonction de faire obstacle audit écoulement principalement dans la partie centrale de celui-ci.
Comme représenté sur les figures 1 et 2a la plaque est perpendiculaire au plan Oxy.
Toutefois, il est possible d'incliner la plaque 34 de manière à ce que l'angle entre la surface de celle-ci et le plan Oxy soit inférieur à 90° et par exemple égal à 87°. Ceci est également vrai pour les éléments en forme de plaques planes décrits ultérieurement en relation avec les figures 2b, 3a, 4a, 5a-d et 7a-d.
La plaque est écartée des parois latérales 30 et 32 du dispositif et est solidaire d'un support 36 disposé dans le plan Oxz et se présentant sous la forme d'une embase plane rectangulaire (Fig.2a).
Cette embase 36 est fixée par ses deux extrémités apposées 36a et 36b suivant la direction Oz aux parois supérieure et inférieure du dispositif 10 (non représentées sur les figures) qui sont perpendiculaires aux parois latérales 30 et 32.
La plaque 34 est symétrique par rapport au plan médian parallèle au plan Oxy.
Il est préférable que l'extension de la plaque 34 suivant une direction contenue dans le plan Oxy soit plus grande dans sa partie centrale que de part et d'autre de celle-ci dans la direction Oz afin d'affecter principalement la partie centrale de l'écoulement.
Comme représenté sur la figure 2a, la plaque 34 possède une base rectangulaire reliée à l'embase 36 et se prolonge du côté opposé à celui de ladite embase par une forme triangulaire, la pointe du triangle étant située à mi-hauteur de ladite plaque.
En outre, la plaque 34 est dissymétrique par rapport au plan Oxz et forme avec celui-ci, et donc avec la direction locale de l'écoulement, un angle θ (Figs.1 et 2a).
Une telle plaque réduit la vitesse de l'écoulement au centre de celui-ci suivant l'axe Oz.
Toutefois, lorsque la plaque 34 est placée dans le plan Oxz la réduction de la vitesse de l'écoulement est moins importante.
Il convient de noter que plus l'extension de la plaque 34 dans la direction contenue dans le plan Oxy est grande, plus il convient de choisir un angle θ qui soit faible afin de ne pas réduire de manière trop importante la vitesse de l'écoulement à mi-hauteur, car ceci atténuerait l'effet bénéfique de la plaque sur le profil de vitesse de l'écoulement.
Telle que représentée sur la figure 2a, l'extension suivant l'axe Oz, ou hauteur, de la plaque 34 est à peu près égale à la hauteur du dispositif de mesure 10 à l'endroit où la plaque est aménagée.
Toutefois, il est également possible de concevoir une plaque 38 dont l'extension suivant l'axe Oz est inférieure à la hauteur locale du dispositif de mesure 10, comme représenté sur la figure 2b.
Ainsi, de part et d'autre de la plaque 38, le long de la direction Oz, deux espaces sont laissés libres pour l'écoulement qui se situe le plus près des parois inférieure et supérieure non représentées afin que ladite plaque n'affecte directement que la partie centrale de l'écoulement.

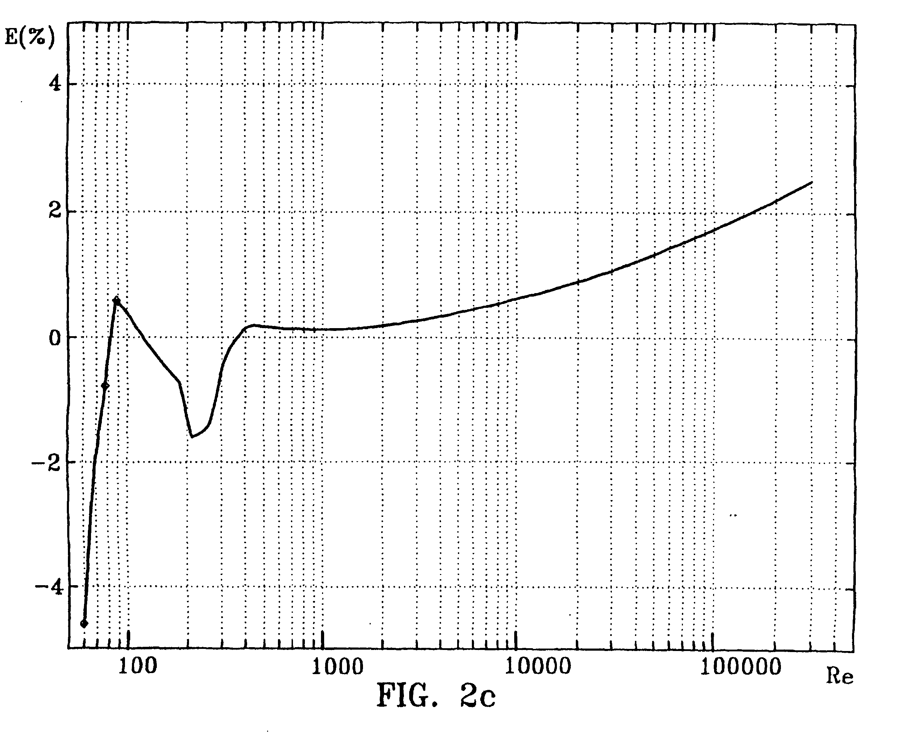

La figure 2c indique la tendance générale de la courbe d'erreur en fonction du nombre de Reynolds de l'écoulement obtenue dans un dispositif de mesure utilisant un oscillateur fluidique par suite de la réduction de vitesse au centre de l'écoulement suivant l'axe Oz.
Avec un dispositif de mesure tel que représenté aux figures 1 et 2a, en optimisant les différents paramètres dudit dispositif, par un travail de routine, l'homme du métier peut obtenir une erreur de mesure sur le débit inférieure à ± 2 % sur une large gamme de nombres de Reynolds s'étendant de 70 à 100000, et une erreur inférieure à ± 1 % sur une gamme plus réduite comprise entre 300 et 10000.

La Demanderesse s'est aperçue qu'en plaçant une plaque plane dans l'écoulement, comme décrit ci-dessus en référence aux figures 1, 2a et 2b, l'énergie contenue dans ledit écoulement au droit de la fente 14 augmentait et ainsi la fréquence d'oscillation du dispositif était plus élevée.

A titre de variante, la figure 3a montre plusieurs éléments Aᵢ, i = 1 à 6, ayant chacun la forme d'une plaque sensiblement plane et qui forme obstacle à l'écoulement.
Ces éléments sont solidaires d'un support 36 identique à celui-ci de la figure 2a et sont distribués suivant l'axe Oz de telle manière que deux éléments consécutifs Aᵢ et Aᵢ₊₁ sont décalés angulairement l'un par rapport à l'autre.
Comme représenté sur la figure 3a, deux éléments consécutifs Aᵢ, Aᵢ₊₁ forment chacun avec le plan Oxz un angle égal à ± θ_{A}.
Dans cet exemple, l'angle θ_{A} est très ouvert mais l'extension des éléments Aᵢ suivant une direction contenue dans le plan Oxy est faible et est identique pour tous les éléments.
Si cette extension était trop grande cela aurait pour conséquence de modifier de manière trop importante le profil de vitesse et de créer des écoulements tourbillonnaires qui risqueraient de perturber le phénomène d'oscillation du jet.
Il convient de remarquer que deux éléments consécutifs Aᵢ, Aᵢ₊₁ peuvent également former chacun avec le plan Oxz un angle différent en valeur absolue.
Ces éléments Aᵢ sont éloignés des extrémités 36a et 36b du support 36 et donc des parois supérieures et inférieures du dispositif de mesure afin de former obstacle à l'écoulement uniquement dans sa partie centrale et donc de laisser libre des espaces supérieur et inférieur pour l'écoulement situé le plus près des dites parois supérieure et inférieure.

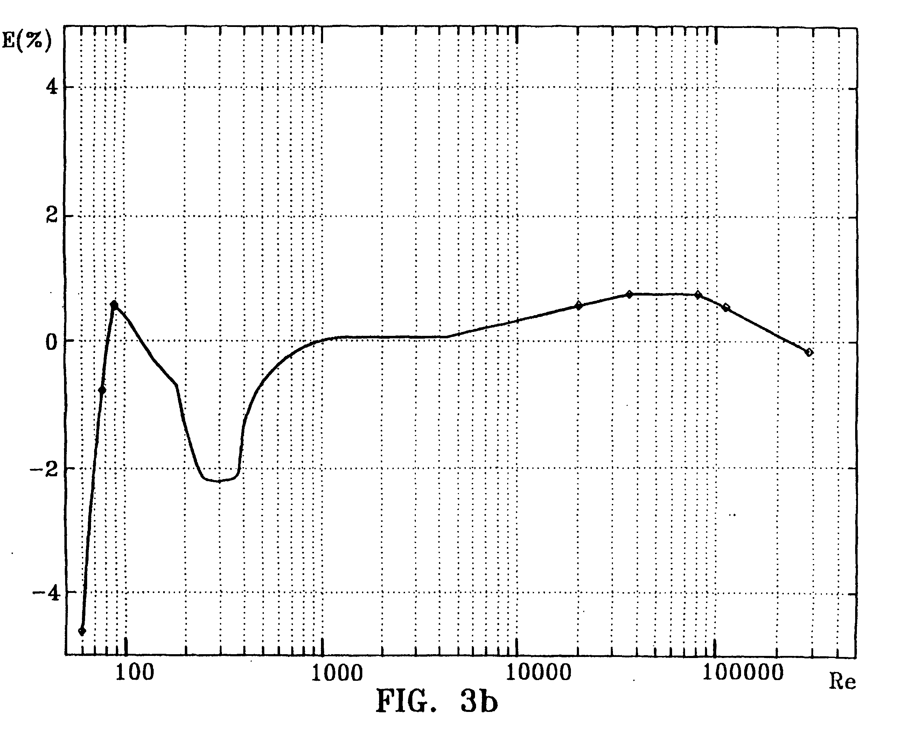

La figure 3b indique la tendance générale de la courbe d'erreur en fonction du nombre de Reynolds de l'écoulement obtenue avec un dispositif de mesure tel que représenté à la figure 1 et où l'élément de la figure 2a est remplacé par les éléments Aᵢ de la figure 3a. En optimisant les différents paramètres du dispositif, par un travail de routine, l'homme du métier peut obtenir une erreur de mesure sur le débit inférieure à ± 0,5 % sur une gamme de nombres de Reynolds compris entre 900 et 300000, et une erreur comprise entre ± 2,5 % pour les nombres de Reynolds compris entre 70 et 900.

Selon une troisième variante de réalisation représentée à la figure 4a, plusieurs éléments Bᵢ, i = 1 à 6, ayant chacun la forme d'une plaque sensiblement plane sont distribués sur un support identique au support 36 de la figure 2a , le long de l'axe Oz de manière analogue aux éléments Aᵢ de la figure 3a. Toutefois, ces éléments Bᵢ de dimensions identiques entre eux possèdent une extension dans une direction contenue dans le plan Oxy qui est supérieure à celle des éléments Aᵢ de la figure 3a.
En outre, ces éléments Bᵢ forment chacun avec le plan Oxz un angle θ_{B} réduit par rapport à l'angle θ_{A} de la figure 3a.
En effet, étant donné les dimensions des éléments Bᵢ, un angle θ_{B} trop ouvert risquerait d'augmenter l'erreur à bas débit.
L'angle θ_{B} en valeur absolue peut être le même pour tous les éléments Bᵢ tel que représenté sur la figure 4a, mais il peut également être différent pour deux éléments consécutifs Bᵢ, Bᵢ₊₁.

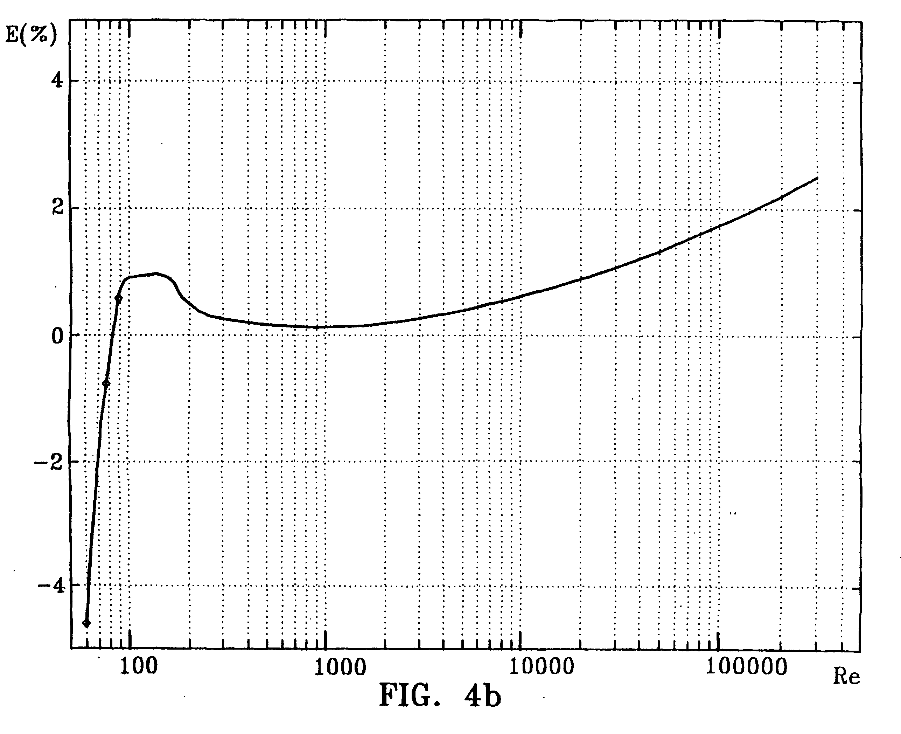

La figure 4b indique la tendance générale de la courbe d'erreur en fonction du nombre de Reynolds de l'écoulement obtenue avec un dispositif de mesure tel que représenté à la figure 1 et où l'élément de la figure 2a est remplacé par les éléments Bᵢ de la figure 4a. En optimisant les différents paramètres du dispositif, par un travail de routine, l'homme du métier peut obtenir une erreur de mesure inférieure à ±2 % sur une gamme de nombres de Reynolds compris entre 70 et 100000, et inférieure à ±1 % entre 80 et 10000.

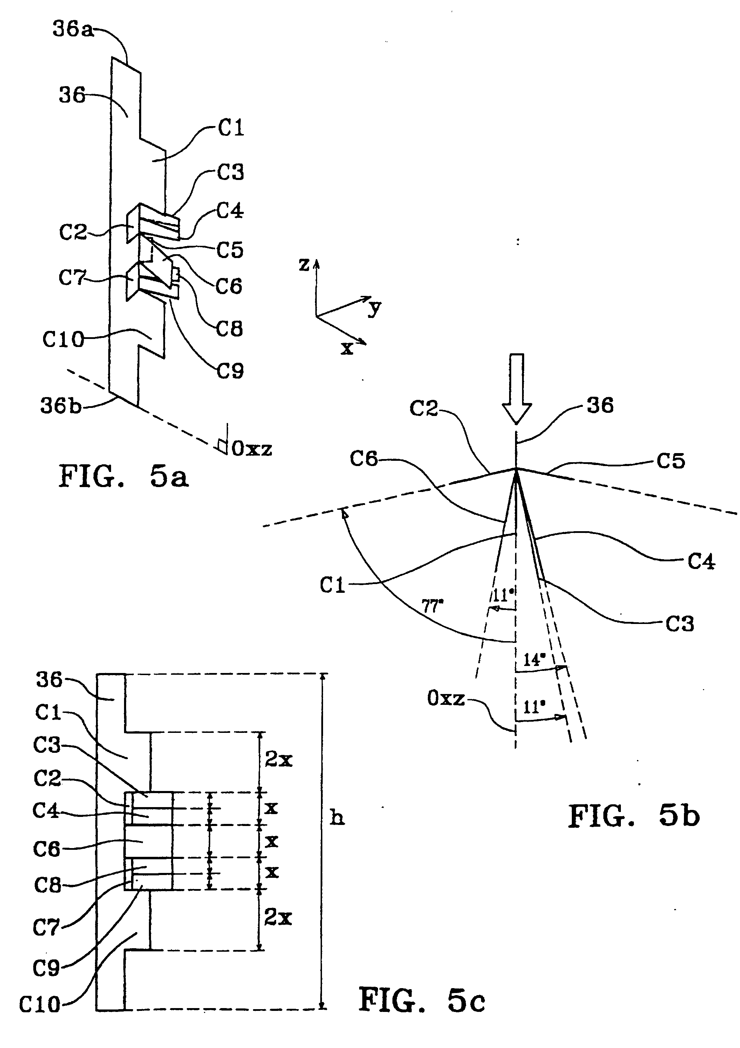

Selon une quatrième variante de réalisation représentée suivant différentes vues aux figures 5a, 5b et 5c, plusieurs éléments Cᵢ, i = 1 à 10, ayant chacun la forme d'une plaque sensiblement plane sont distribués le long de l'axe Oz sur un support identique au support 36 décrit en relation avec la figure 2a.
Deux éléments consécutifs Cᵢ, Cᵢ₊₁ sont décalés angulairement l'un par rapport à l'autre et ne forment pas nécessairement le même angle en valeur absolue avec le plan Oxz.
Les éléments Ci ont des dimensions qui varient suivant leur position le long de l'axe Oz. Les éléments qui ont l'extension la plus grande suivant une direction contenue dans le plan Oxy sont appelés éléments centraux
C₃, C₄, C₆, C₈, C₉ et sont disposés de telle manière qu'ils exercent leur influence dans la partie centrale de l'écoulement principalement pour les faibles nombres de Reynolds.
Ces éléments centraux forment avec le plan Oxz un angle relativement faible, par exemple de 11° pour les éléments C₃ et C₆ et de 14° pour C₄ (Fig.5b).
D'autres éléments C2, C5, C7 qui exercent également une influence dans la partie centrale de l'écoulement, mais principalement pour les nombres de Reynolds élevés, sont représentés par des plaques de faibles extensions suivant une direction contenue dans le plan Oxy et qui forment avec le plan Oxz un angle très ouvert, par exemple de 77° pour ces trois éléments (Fig.5b).
Les éléments C₂, C₅ et C₇ ont par exemple une extension suivant une direction contenue dans le plan Oxy qui est égale à 0,32d, où d est la largeur de la fente 14, et les éléments C₃, C₄, C₆, C₈, C₉ ont une extension dans cette même direction qui est égale à 1,16 d.
La distance entre le côté de l'embase 36 auquel sont rattachés les différents éléments Cᵢ, i = 1 à 10, et la fente 14 représentée sur la figure 1 est par exemple égale à 2,45d.
Il ne faut pas que les éléments soient placés trop près de la fente 14 et encore moins dans la fente car la formation du jet de fluide risquerait d'être fortement perturbée. Une distance minimale égale à d par rapport à la fente conviendrait.
En outre, la figure 5c représente l'extension suivant l'axe Oz, ou hauteur, de chacun des éléments Cᵢ en fonction de X, où X est par exemple égal à 0,096h, h représentant la hauteur locale du dispositif de mesure 10.
Par exemple, h est comprise entre 3d et 10d et d est par exemple égal à 10mm.
Les éléments C₁ et C₁₀ disposés de part et d'autre des éléments centraux suivant l'axe Oz sont situés dans le plan Oxz.
De façon analogue à ce qui est représenté sur les figures 2b, 3a et 4a et pour les mêmes raisons, deux espaces libres sont prévus entre ces deux éléments C₁, C₁₀ et les parois supérieure et inférieure du dispositif de mesure.
Toutefois, il est possible de procurer aux éléments C₁ et C₁₀ une forme telle que leur extension dans une direction contenue dans le plan Oxy croisse progressivement depuis les extrémités respectives 36a et 36b du support afin de remplir partiellement les espaces libres précédemment cités (Fig.5d).

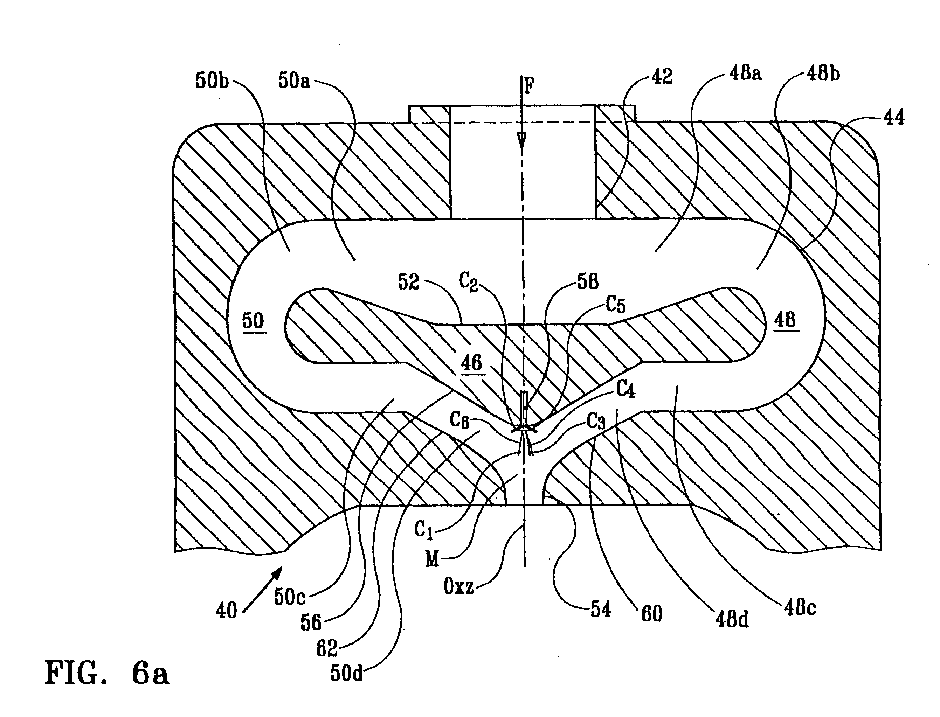

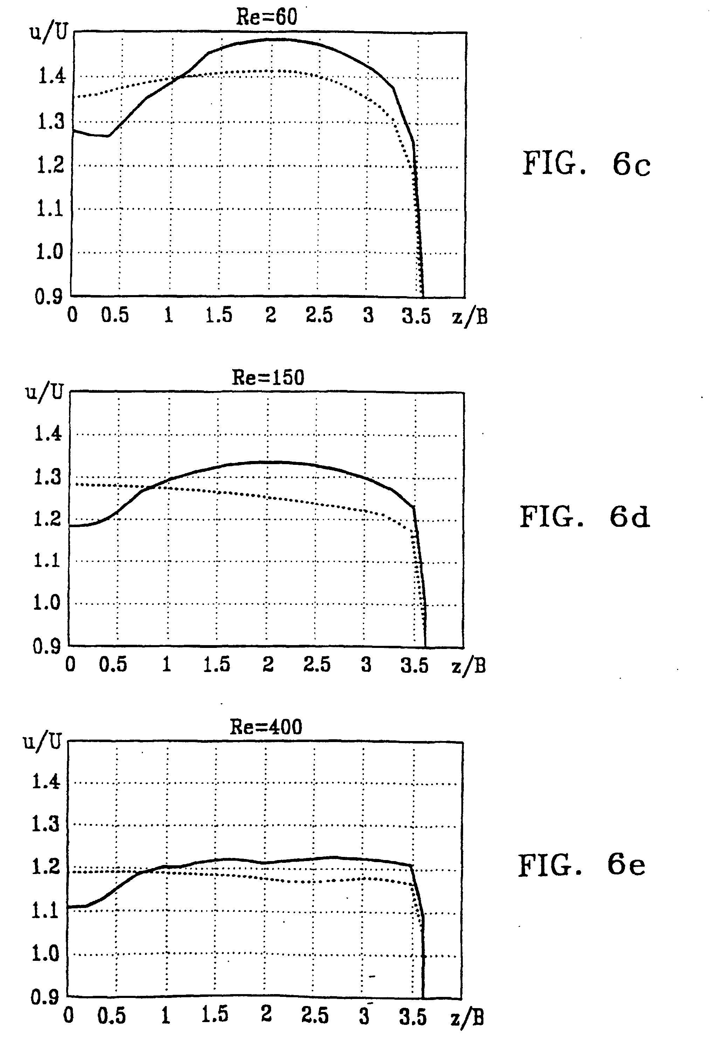

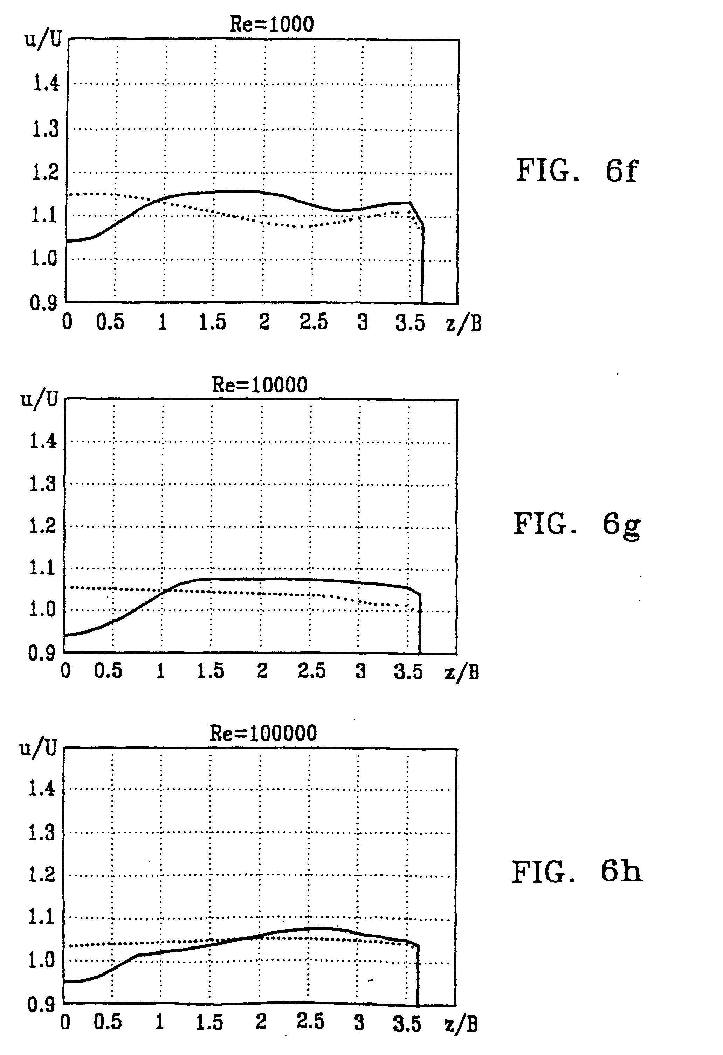

La figure 6a représente en vue de dessus un second mode de réalisation d'un dispositif de mesure 40.
Cette figure représente la partie du dispositif de mesure située en amont de l'oscillateur fluidique. L'oscillateur fluidique est par exemple le même que celui représenté à la figure 1.
L'écoulement de gaz dont la direction est indiquée par la flèche F pénètre par une entrée 42 de section transversale circulaire dans une enceinte 44 où est logé un obstacle 46 qui forme avec les parois de l'enceinte deux passages 48, 50 symétriques par rapport au plan Oxz. Cette structure est un conditionneur d'écoulement pour le gaz et a été décrite en détails dans la demande de brevet français n° 9501425 non encore publiée.
L'écoulement issu de l'entrée 42 heurte la surface frontale 52 de l'obstacle 46 et se fractionne sur cette surface, transformant ainsi la direction longitudinale de la vitesse moyenne dudit écoulement en composantes transversales. Les deux fractions de l'écoulement empruntent chacune de manière sensiblement symétrique une portion convergente 48a, 50a des passages respectifs 48, 50.
Chaque fraction d'écoulement emprunte ensuite un premier coude 48b ou 50b à 180° puis un second coude 48c ou 50c avant d'être canalisée par une portion droite 48d ou 50d du passage correspondant vers une zone dite de mélange M où les deux fractions d'écoulement se rejoignent.
Cette zone de mélange M est située en amont de la fente 54 de l'oscillateur fluidique non représenté sur cette figure.
La partie arrière 56 de l'obstacle 46 forme une pointe et une rainure 58 allongée suivant la direction Oz est aménagée dans cette pointe afin d'y recevoir l'embase 36 sur laquelle sont fixés les éléments Cᵢ, i = 1 à 10, des figures 5a à 5c.
Les éléments Cᵢ sont représentés sur la figure 6a de façon analogue à leur représentation sur la figure 5b.

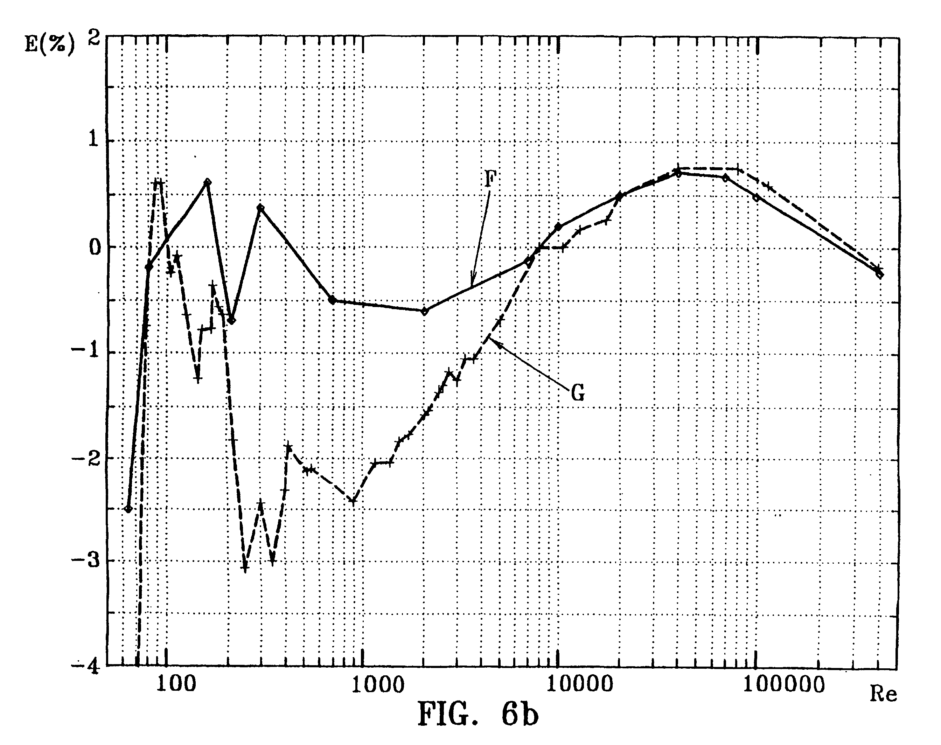

La figure 6b représente deux courbes d'erreur en fonction du nombre de Reynolds obtenues avec le dispositif de mesure de la figure 6a, l'une (F) obtenue avec les éléments Cᵢ et l'autre (G) obtenue sans ces éléments.
Ainsi, pour une gamme de nombres de Reynolds compris entre 70 et 300000 l'erreur commise sur la mesure du débit avec la courbe F est inférieure à ± 1 %.
Compte tenu des très bons résultats obtenus sur une large gamme de nombres de Reynolds avec le dispositif de mesure selon l'invention, il est possible de couvrir une gamme de débits qui s'étend par exemple de 0,25 m³/h à 40 m³/h et dont la dynamique est donc de 160.
Ces résultats sont de même nature lorsque les éléments Cᵢ de la figure 5a sont disposés dans l'écoulement, comme représenté à la figure 1, à la place de la plaque 34.
Il convient également de remarquer qu'avec les éléments Cᵢ de la figure 5a les erreurs réalisées sur la mesure de débit sont réduites par rapport à celles obtenues avec le dispositif de mesure de l'art antérieur qui est décrit dans le document FR 2 663 417 pour les faibles valeurs du nombre de Reynolds.
Le dispositif de l'art antérieur ne peut couvrir une gamme de nombres de Reynolds qui s'étend de 50 à 10000.
En effet, si la toile métallique utilisée dans le dispositif de l'art antérieur possède un maillage très fin pour s'adapter aux faibles nombres de Reynolds, alors les pertes de charge seront très élevées pour les fortes valeurs du nombre de Reynolds.
En outre, un maillage très fin posera très rapidement des problèmes de contamination.
Un dispositif de mesure équipé des éléments Ai de la figure 3a procure également de très bon résultats pour les nombres de Reynolds élevés.
Un dispositif de mesure équipé des éléments Bi de la figure 4a procure également de très bon résultats pour les faibles nombres de Reynolds.

Les figures 6c à 6h montrent pour différentes valeurs du nombre de Reynolds une moitié des profils de vitesse de l'écoulement selon l'axe Oz (l'autre moitié étant symétrique par rapport à l'axe des ordonnées de chaque figure considérée) au droit de la fente 14 de la figure 1, obtenus en remplaçant l'élément 34 de la figure 1 par les éléments Cᵢ de la figure 5a.
La courbe en pointillés représente le demi-profil de vitesses obtenu en l'absence d'éléments formant obstacle à l'écoulement en amont de la fente. Ainsi, les courbes en trait plein montrent que les éléments Cᵢ qui forment obstacle à l'écoulement réduisent de manière importante la vitesse de l'écoulement au centre de celui-ci le long de l'axe Oz sur une gamme de nombres de Reynolds s'étendant de 60 à 100000.
La comparaison des figures 6c-h permet de constater q'une forme générale représentée par un creux central et deux bosses périphériques est respectée pour tous les nombres de Reynolds indiqués en présence des éléments Cᵢ.
Au contraire, en l'absence d'éléments Cᵢ, lorsque le nombre de Reynolds augmente, le profil de vitesses de l'écoulement passe d'un profil sensiblement parabolique à un profil sensiblement plat.
On peut constater que les éléments Cᵢ permettent d'augmenter la vitesse de l'écoulement suivant la direction Oz à proximité des parois. Ceci est dû au fait que la vitesse étant réduite au centre de l'écoulement se redistribue sur les côtés suivant l'axe Oz.

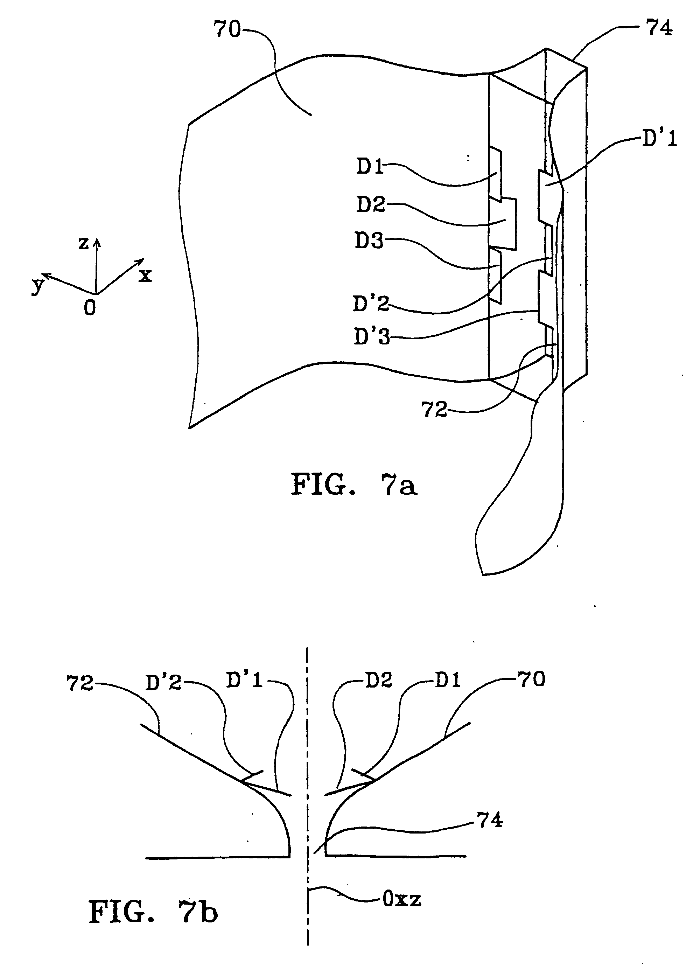

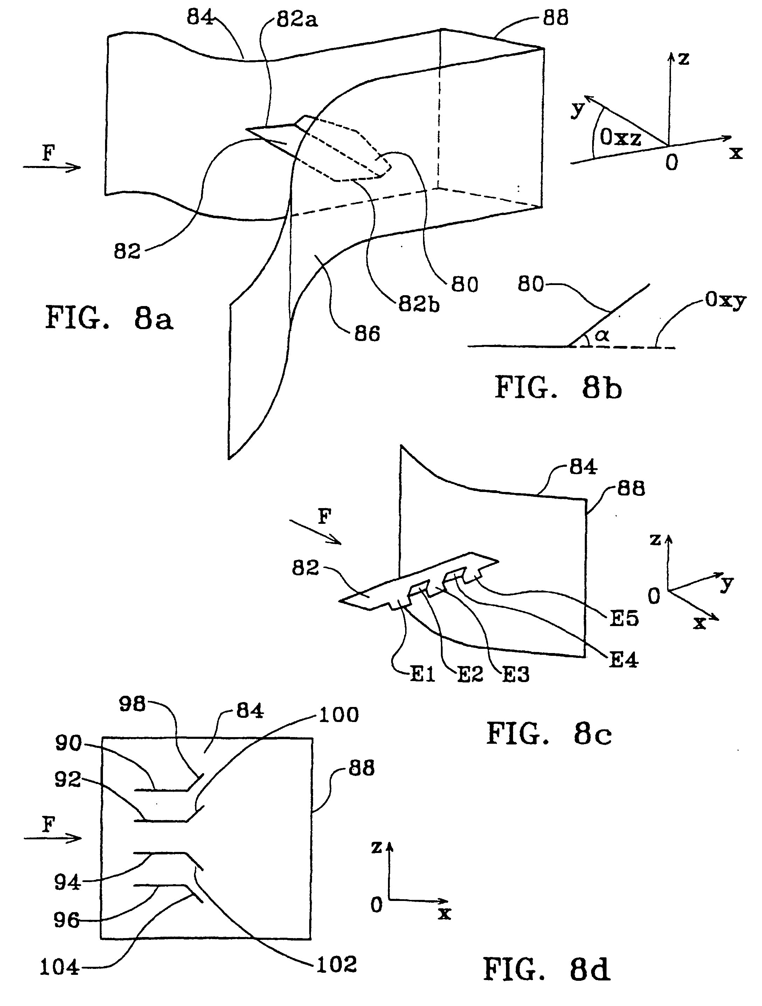

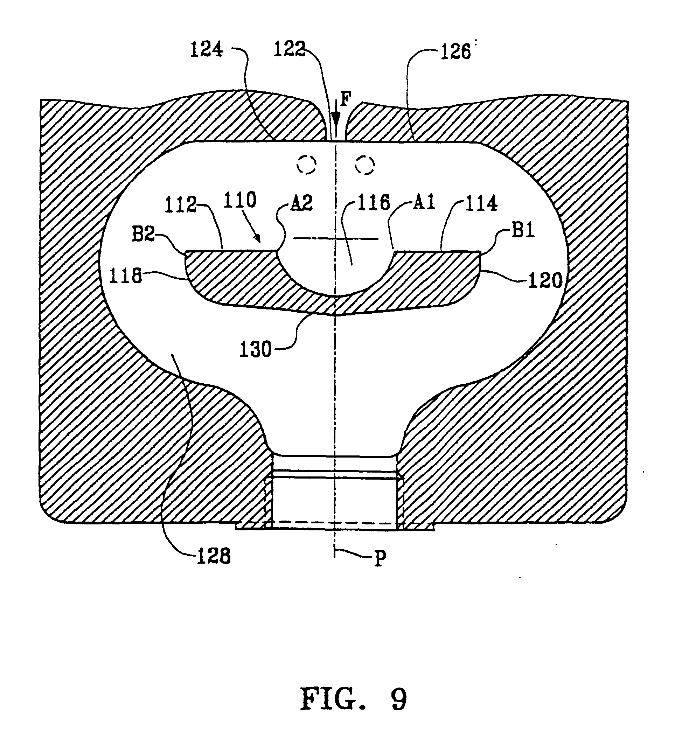

Il convient de remarquer les éléments formant obstacle à l'écoulement peuvent être assujettis à l'une ou aux deux parois latérales 30 et 32 de la figure 1 ou bien encore , par exemple, aux parois latérales 60, 62 de la figure 6a.
Comme représenté sur les figures 7a et 7b, les éléments Dᵢ, D'ᵢ formant obstacle à l'écoulement sont aménagés sur les parois latérales 70, 72 du dispositif de mesure représenté partiellement sur cette figure en amont de la fente 74.
Le dispositif de mesure peut comprendre par exemple l'oscillateur fluidique de la figure 1.
Les éléments Dᵢ (respectivement D'ᵢ), i = 1 à 3, se présentent sous la forme de plaques planes distribuées le long de la direction Oz et décalées angulairement pour deux plaques consécutives. Ces plaques sont par exemple montées sur un support analogue au support 36 des figures précédentes qui est disposé dans une fente (non représentée) aménagée dans chaque paroi 70, 72.
Les éléments Dᵢ et D'ᵢ sont symétriques par rapport au plan Oxz mais peuvent également être dissymétriques.
Par exemple, les éléments D₁ et D₃ (respectivement D'₁ et D'₃) sont analogues aux éléments Aᵢ de la figure 3a alors que l'élément D₂ (respectivement D'₂) est analogue aux éléments Bi de la figure 4a.
D'autres configurations telles que par exemple celles représentées sur les figures 5a et 5d sont également envisageables.
Les éléments D₁, D₃ (respectivement D'₁ et D'₃) peuvent par exemple être identiques entre eux et ainsi conférer aux éléments Dᵢ (respectivement D'ᵢ) une symétrie par rapport au plan médian parallèle au plan Oxy ou être différents.
De façon analogue à ce qui est représenté sur les figures 3a, 4a et 5a et pour les mêmes raisons, deux espaces libres sont prévus entre les éléments latéraux D₁, D₃ (respectivement D'₁ et D'₃) et les parois supérieure et inférieure du dispositif de mesure.
Les éléments représentés sur les figures 7a et 7b permettent ainsi de réduire la vitesse de l'écoulement suivant la direction Oz principalement dans sa partie centrale.
Il faut souligner que les éléments représentés sur les figures 2a-b, 3a, 4a, 5a-d, 6a, 7a-b ne sont pas nécessairement symétriques par rapport au plan médian parallèle au plan Oxy.
Selon un quatrième mode de réalisation de l'invention représenté à la figure 8a, l'élément 80 en forme de plaque est sensiblement perpendiculaire au plan Oxz.
L'élément est solidaire d'un support 82 qui se présente également sous la forme d'une embase disposée parallèlement au plan Oxy de manière à offrir le moins de résistance possible à l'écoulement symbolisé par la flèche notée F. Ce support est monté par l'intermédiaire de ses deux extrémités opposées 82a, 82b entre les deux parois latérales 84, 86 du dispositif situées en amont de la fente 82 et sensiblement à mi-hauteur du dispositif. Les extrémités 82a, 82b peuvent par exemple être logées dans deux rainures respectivement pratiquées dans les parois latérales 84, 86.
L'élément en forme de plaque forme avec le plan Oxy un angle prédéterminé α de manière à offrir à l'écoulement une certaine surface de contact permettant ainsi de modifier le profil de vitesses de l'écoulement principalement dans sa partie centrale (Fig 8b).
Cet élément permet de réduire la vitesse de l'écoulement au centre de celui-ci suivant la direction Oz.
L'élément 80 de la figure 8a est analogue à celui de la figure 2a.
Cet élément peut également être remplacé par le (ou les éléments) représenté(s) sur les figures 2b, 3a, 4a et 5a qui serai(ent) alors disposé(s) sensiblement perpendiculairement au plan Oxz.
Par exemple, la figure 8c représente sous un autre angle que celui de la figure 8a une de ces variantes où les éléments Ei, i = 1 à 5, analogues aux éléments Ai de la figure 3a remplacent l'élément 80 de la figure 8a. Toujours à titre de variante, la figure 8d illustre en vue de côté un dispositif de mesure dans lequel plusieurs embases 90, 92, 94, 96 parallèles entre elles sont placées sensiblement perpendiculairement au plan Oxz et parallèlement au plan Oxy.
Ces embases montées entre les parois latérales 84, 86 du dispositif en amont de la fente 82 servent de support à des éléments en forme de plaques planes 98, 100, 102, 104 qui leur sont solidaires.
Les éléments 98-104 forment chacun avec le plan Oxy un angle prédéterminé identique pour chaque couple 98-100, 102-104.
L'oscillateur fluidique disposé en aval de la fente 82 pour les trois variantes des figures 8a-d peut être par exemple celui représenté à la figure 1 ou encore celui représenté sur la figure 9.
L'oscillateur fluidique représenté à la figure 9 est décrit dans la demande de brevet français n°96 03315 déposée le 15 Mars 1996 au nom de la Demanderesse et non encore publiée.
Cet oscillateur fluidique se distingue de celui de la figure 1 par le fait que la paroi frontale de l'obstacle 110 comprend deux surfaces dites frontales 112, 114 essentiellement planes et qui encadrent la cavité 116, le plan de chaque surface étant sensiblement perpendiculaire au plan de symétrie longitudinale P de l'oscillateur.
La cavité 116 de l'oscillateur est définie par une surface qui est sensiblement parallèle au plan de symétrie aux endroits A1, A2 où ladite surface rejoint chacune des surfaces frontales 112, 114.
L'obstacle 110 possède également deux parois latérales 118, 120 dont les surfaces dites latérales sont sensiblement parallèles au plan de symétrie aux endroits B1, B2 où chacune d'entre elles rejoint la surface frontale 112, 114 correspondante.
De part et d'autre de la fente 122, les parois 124, 126 délimitant la chambre d'oscillation 128 ont des surfaces sensiblement parallèles aux surfaces frontales.
En outre, la partie arrière 130 de l'obstacle est sensiblement plane et beaucoup plus courte que celle de l'obstacle représenté sur la figure 1. Cette configuration d'oscillateur fluidique permet d'obtenir des tourbillons principaux dont l'extension radiale (distance entre le centre du tourbillon et sa périphérie) croît avec le nombre de Reynolds, contribuant ainsi à réduire la fréquence d'oscillation du jet.
Avec cette configuration, les tourbillons se développent de manière plus libre que dans celle représentée à la figure 1.
Par ailleurs, un tel oscillateur fluidique est plus simple à fabriquer assurant ainsi une meilleure répétabilité des mesures.
Les éléments en forme de plaques planes représentés sur les figures 8a-d permettent d'éviter les problèmes de contamination rencontrés dans l'art antérieur et notamment dans le disposifif décrit dans le document FR 2 663 417 tout en formant obstacle à l'écoulement afin de modifier le profil de vitesses de celui-ci de manière contrôlée.
Il convient de préciser que ces éléments favorisent une redistribution directe du profil de vitesses dans l'écoulement suivant la direction Oz alors que les éléments représentés sur les figures 1, 2a-b, 3a, 4a, 5a-d, 6a, 7a-b redistribuent le profil de vitesses d'abord dans des plans parallèles au plan Oxy puis ensuite suivant la direction Oz.
Là encore, les dimensions des éléments en forme de plaques planes et les angles d'inclinaison de ces éléments avec le plan Oxy sont en relation les uns avec les autres pour les mêmes raisons que celles déjà évoquées dans la description relative aux figures 3a, 4a et 5a.
Ainsi, l'angle d'inclinaison de ce ou de ces éléments est d'autant plus élevé que la surface du ou des éléments qui forme(nt) obstacle à l'écoulement est d'autant plus petite.
Les éléments représentés sur les figures 8a-d ne sont pas nécessairement symétriques par rapport au plan longitudinal Oxy ni même par rapport au plan Oxz.
Les éléments formant obstacle à l'écoulement selon l'invention sont par exemple obtenus par découpage et pliage d'une tôle métallique sensiblement plane et sont ainsi formés d'une seule pièce avec leur support.
Il est également possible de concevoir que les éléments formant obstacle à l'écoulement et leur support constituent au moins deux pièces séparées.
On a pu constater que le(ou les) élément(s) en forme de plaque(s) plane(s) disposé(s) dans l'écoulement en amont de la fente et décrit(s) en relation avec l'une des figures précédentes contribuai(en)t à minimiser l'influence des changements de régime d'écoulement (laminaire-transition-turbulent) sur la courbe de calibration du dispositif de mesure correspondant. Ceci est d'ailleurs manifeste à la lumière de la figure 6b.

## Revendications

1. Dispositif (10) de mesure du débit d'un fluide en écoulement comprenant un oscillateur fluidique (12) muni d'une fente (14;54) allongée suivant une direction Oz et apte à former un jet de fluide oscillant dans un plan Oxy perpendiculaire à cette direction et, en amont de la fente, des moyens de modification de la distribution de vitesses dans l'écoulement, **caractérisé en ce que** lesdits moyens comprennent au moins un élément (34;38;Aᵢ;Bᵢ;Cᵢ;Dᵢ,D'ᵢ;80;Eᵢ;98-104) formant obstacle à l'écoulement au moins dans sa partie centrale et se présentant sous la forme d'une plaque sensiblement plane.

2. Dispositif selon la revendication 1, dans lequel l'élément en forme de plaque (34;38;Aᵢ;Bᵢ;Cᵢ;Dᵢ,D'ᵢ) est sensiblement perpendiculaire au plan Oxy.

3. Dispositif selon la revendication 1 ou 2, dans lequel le fluide s'écoule dans une direction Ox au droit de ladite fente (14) et l'élément formant obstacle à l'écoulement est symétrique par rapport au plan Oxz.

4. Dispositif selon la revendication 1 ou 2, dans lequel le fluide s'écoule dans une direction Ox au droit de ladite fente et l'élément (34;38;Aᵢ;Bᵢ;Cᵢ;Dᵢ,D'ᵢ) formant obstacle à l'écoulement est dissymétrique par rapport au plan Oxz.

5. Dispositif selon la revendication 3 ou 4, comprenant des parois latérales (30,32;60,62) sensiblement perpendiculaires au plan Oxy, symétriques par rapport au plan Oxz et qui guident l'écoulement jusqu'à la fente (14;54).

6. Dispositif selon la revendication 5, dans lequel l'élément (Dᵢ,D'ᵢ) formant obstacle à l'écoulement est assujetti à au moins une des parois latérales du dispositif.

7. Dispositif selon l'une des revendications 1 à 5, dans lequel l'élément (34;38;Aᵢ;Bᵢ;Cᵢ) formant obstacle à l'écoulement est solidaire d'un support (36) qui est disposé dans l'écoulement de fluide.

8. Dispositif selon la revendication 7, dans lequel le support forme un conditionneur d'écoulement pour ledit dispositif et ledit le conditionneur fractionne l'écoulement en deux écoulements dits fractionnés qui se rejoignent dans une zone (M) située sensiblement dans le plan Oxz en amont de la fente (54).

9. Dispositif selon la revendication 8, dans lequel l'élément (34;38;Aᵢ;Bᵢ;Cᵢ) formant obstacle à l'écoulement est disposé dans la zone (M).

10. Dispositif selon la revendication 8, dans lequel les éléments formant obstacle à l'écoulement sont répartis sur le passage de chaque écoulement fractionné.

11. Dispositif selon l'une des revendications 1 à 10, dans lequel le (ou les) élément(s) (38;Aᵢ;Bᵢ;Cᵢ;D_{i;}D'i) formant obstacle à l'écoulement a (ont) une extension totale suivant l'axe Oz qui est inférieure à la dimension locale suivant cette même direction du dispositif, de manière à laisser libre pour l'écoulement un espace de part et d'autre dudit (ou desdits) élément(s) dans cette direction.

12. Dispositif selon l'une des revendications 1 à 11, dans lequel le (ou les) élément(s) (38;Aᵢ;Bᵢ;Cᵢ;D_{i;}D'i) formant obstacle à l'écoulement possède(nt) une extension suivant une direction contenue dans le plan Oxy qui est d'autant plus grande que l'angle formé par le(s)dit(s) élément(s) avec la direction locale de l'écoulement est faible.

13. Dispositif selon l'une des revendications 1 à 12, dans lequel les moyens de modification de la distribution de vitesses comprennent plusieurs éléments (Aᵢ;Bᵢ;Cᵢ;Dᵢ;D'ᵢ) formant obstacle à l'écoulement et qui sont distribués le long de la direction Oz.

14. Dispositif selon la revendication 13, dans lequel les éléments (Aᵢ;Bᵢ;Cᵢ;Dᵢ;D'ᵢ) consécutifs sont décalés angulairement l'un par rapport à l'autre.

15. Dispositif selon la revendication 13, dans lequel les éléments (Aᵢ;Bᵢ;Cᵢ;Dᵢ) qui sont situés dans la partie centrale de l'écoulement suivant la direction Oz, appelés éléments centraux, ont une extension suivant une direction contenue dans le plan Oxy qui est plus grande que celle des éléments situés de part et d'autre des éléments centraux suivant la direction Oz.

16. Dispositif selon l'une des revendications 1 à 15, dans lequel les moyens de modification de la distribution de vitesses comprennent un seul élément (34;38) formant obstacle à l'écoulement et qui possède une extension suivant une direction contenue dans le plan Oxy qui est plus grande dans sa partie centrale que de part et d'autre de celle-ci dans la direction Oz.

17. Dispositif selon la revendication 1, dans lequel l'élément en forme de plaque (80;Eᵢ;98-104) est sensiblement perpendiculaire au plan Oxz, le fluide s'écoulant dans la direction Ox au droit de la fente (88).

18. Dispositif selon la revendication précédente, dans lequel la plaque (80;Eᵢ;98-104) forme avec le plan Oxy un angle qui est d'autant plus grand que la surface de ladite plaque que rencontre l'écoulement de fluide est faible.

## Patentansprüche

1. Durchflussmessgerät (10) eines strömenden Fluids mit einem Fluidoszillator (12), der eine in Oz-Richtung verlängerte Schlitzblende (14 ; 54) aufweist und einen in der Oxy-Ebene, senkrecht zu dieser Richtung schwingenden Fluidstrahl bilden kann sowie Vorrichtungen für die Änderungen der Geschwindigkeitsverteilung in der Strömung hat, **dadurch gekennzeichnet, dass** die sogenannten Vorrichtungen zumindest aus einem der Elemente (34, 38, Aᵢ, Bᵢ, Cᵢ, Dᵢ, D'ᵢ, 80, Eᵢ, 98-104) bestehen, die das Strömungshindernis zumindest im seinem zentralen Bereich bilden und die Form einer nahezu ebene Platte haben.

2. Gerät gemäss Anspruch 1, in dem das plattenförmige Element (34, 38, Aᵢ, Bᵢ, Cᵢ, Dᵢ, D'ᵢ) nahezu senkrecht zur Oxy-Ebene steht.

3. Gerät gemäss des Anspruchs 1 oder 2, in dem das Fluid in Ox-Richtung auf die schon erwähnte Schlitzblende (14) strömt und das Strömungshindernis bildende Element symmetrisch zur Oxz-Ebene ist.

4. Gerät gemäss des Anspruchs 1 oder 2, in dem das Fluid in eine Ox-Richtung, im rechten Winkel zur vorab erwähnten Schlitzblende strömt und das Strömungshindernis bildende Element (34, 38, Aᵢ, Bᵢ, Cᵢ, Dᵢ, D'ᵢ) asymmetrisch zur Oxz-Ebene ist.

5. Gerät gemäss des Anspruchs 3 oder 4, in dem die seitlichen Begrenzungen (30, 32, 60,62) nahezu senkrecht zur Oxy-Ebene und symmetrisch in Bezug auf die Oxz-Ebene sind und die Strömung bis zur Schlitzblende (14, 54) leiten.

6. Gerät gemäss des Anspruchs 5, in dem das Strömungshindernis bildende Element (Dᵢ, D'ᵢ) mit mindestens einer der seitlichen Begrenzungen des Geräts verbunden ist.

7. Gerät gemäss einem der Ansprüche 1 bis 5, in dem das Strömungshindernis bildende Element (34, 38, Aᵢ, Bᵢ, Cᵢ) fest mit der in der Fluidströmung platzierten Befestigungsplatte (36) verbunden ist.

8. Gerät gemäss des Anspruchs 7, in dem das Trägerelement die Strömungsbarriere des genannten Gerätes bildet und in dem diese Barriere die Strömung in zwei sogenannte Teilströmungen auftrennt, die in der Zone (M), fast in der Oxz-Ebene vor der Schlitzblende (54) gelegen, wieder zusammentreffen.

9. Gerät gemäss des Anspruchs 8, in dem das Strömungshindernis bildende Element (34, 38, Aᵢ, Bᵢ, Cᵢ) sich in der Zone (M) befindet.

10. Gerät gemäss des Anspruchs 8, in dem das Strömungshindernis bildenden Elemente über den Weg jeder Teilströmung verteilt sind.

11. Gerät gemäss einem der Ansprüche 1 bis 10, in dem das (oder die) Element(e) (38; Aᵢ; Bᵢ; Cᵢ; Dᵢ; D'ᵢ), die das Strömungshindernis bilde(t)(n), eine Gesamtausdehnung entlang der Oz-Achse ha(t)(haben), die geringer ist als das lokale Geräteabmass in dieser Richtung und zwar in der Weise, dass ein freier Raum beidseitig des(der) genannten Element(s)(e) in dieser Richtung für die Strömung entsteht.

12. Gerät gemäss einem der Ansprüche 1 bis 11, in dem das(die das) Strömungshindernis bildenden) Element(e) (38; Aᵢ; Bᵢ; Cᵢ; Dᵢ; D'ᵢ) eine Ausdehnung in eine der Richtungen in der Oxy-Ebene hat, die umso grösser ist je kleiner der Winkel zwischen dem(den) Element(en) und der lokalen Strömungsrichtung ist.

13. Gerät gemäss einem der Ansprüche 1 bis 12, in dem die Vorrichtungen zur Änderung der Geschwindigkeitsverteilung aus mehreren Elementen (Aᵢ; Bᵢ; Cᵢ; Dᵢ; D'ᵢ) bestehen, die das Strömungshindernis bilden und die entlang der Oz-Richtung verteilt sind.

14. Gerät gemäss des Anspruchs 13, in dem die aufeinanderfolgenden Elemente (Aᵢ; Bᵢ; Cᵢ; Dᵢ; D'ᵢ) zueinander winkelverschoben angeordnet sind.

15. Gerät gemäss des Anspruchs 13, in dem die Elemente (Aᵢ; Bᵢ; Cᵢ; Dᵢ), die sich im zentralen Bereich der Strömung entlang der Oz-Richtung befinden, und zentrale Elemente genannt werden, eine Ausdehnung in einer Richtung innerhalb der Oxy-Ebene haben, die grösser ist die der Elemente die sich beidseitig der zentralen Elemente in Oz-Richtung befinden.

16. Gerät gemäss einem der Ansprüche 1 bis 15, in dem die Vorrichtungen für die Änderung der Geschwindigkeitsverteilung aus einem einzigen das Strömungshindernis bildenden Element (34; 38) bestehen und das in seinem mittleren Bereich eine grössere Ausdehnung in eine Richtung in der Oxy-Ebene hat als die sich beidseitig in Oz-Richtung befindenden.

17. Gerät gemäss des Anspruchs 1, in dem das plattenförmige Element (80; Eᵢ; 98-104) nahezu senkrecht zu der Oxz-Ebene steht und in dem das Fluid senkrecht zur Schlitzblende (88) in Ox-Richtung strömt.

18. Gerät gemäss des vorangehenden Anspruchs, in dem die Platte (80; Eᵢ; 98-104) einen Winkel mit der Oxy-Ebene bildet, der umso grösser ist, desto kleiner die schon erwähnten Platte ist, auf die die Fluidströmung trifft.

## Claims

1. Device (10) to measure the flow rate of a flowing fluid comprising a fluid oscillator (12) equipped with an elongated slit (14; 54) along a direction Oz and capable of forming an oscillating fluid stream in a plane Oxy perpendicular to this direction and, upstream from the slit, means to modify the velocity distribution in the flow, **characterised in that** said means comprise at least one component (34; 38; Aᵢ; Bᵢ; Cᵢ; Dᵢ; D'ᵢ; 80; Eᵢ; 98-104) forming an obstacle to the flow at least in its central part and presented in the form of a roughly plane plate.

2. Device according to claim 1, wherein the component in the form of a plate (34; 38; Aᵢ; Bᵢ; Cᵢ; Dᵢ; D'ᵢ) is roughly perpendicular to the plane Oxy.

3. Device according to claim 1 or 2, wherein the fluid flows in a direction Ox next to said slit (14) and the component forming an obstacle to the flow is symmetrical with respect to the plane Oxz.

4. Device according to claim 1 or 2, wherein the fluid flows in a direction Ox next to said slit and the component (34; 38; Aᵢ; Bᵢ; Cᵢ; Dᵢ; D'ᵢ) forming an obstacle to the flow is dissymmetrical with respect to the plane Oxz.

5. Device according to claim 3 or 4, comprising lateral walls (30, 32; 60, 62) roughly perpendicular to the plane Oxy, symmetrical with respect to the plane Oxz and which guide the flow to the slit (14; 54).

6. Device according to claim 5, wherein the component (Dᵢ, D'ᵢ) forming an obstacle to the flow is attached to at least one of the lateral walls of the device.

7. Device according to any of claims 1 to 5, wherein the component (34; 38; Aᵢ; Bᵢ; Cᵢ) forming an obstacle to the flow is attached to a support (36) which is arranged in the fluid flow.

8. Device according to claim 7, wherein the support forms a flow conditioner for said device and said conditioner splits the flow into two so-called split flows which join each other in a zone (M) located roughly in the plane Oxz upstream from the slit (54).

9. Device according to claim 8, wherein the component (34; 38; Aᵢ; Bᵢ; Cᵢ) forming an obstacle to the flow is arranged in the zone (M).

10. Device according to claim 8, wherein the components forming an obstacle to the flow are distributed on the passage of each split flow.

11. Device according to any of claims 1 to 10, wherein the component(s) (38; Aᵢ; Bᵢ; Cᵢ; Dᵢ; D'ᵢ) forming an obstacle to the flow has/have a total extension along the axis Oz which is less than the local dimension along said direction of the device, so as to leave a space free for the flow at either end of said component(s) in this direction.

12. Device according to any of claims 1 to 11, wherein the component(s) (38; Aᵢ; Bᵢ; Cᵢ; Dᵢ; D'ᵢ) forming an obstacle to the flow comprises/comprise an extension along a direction contained in the plane Oxy which increases as the angle formed by said component(s) with the local flow direction decreases.

13. Device according to any of claims 1 to 12, wherein the means to modify the velocity distribution may comprise several components (Aᵢ; Bᵢ; Cᵢ; Dᵢ; D'ᵢ) forming an obstacle to the flow and which are distributed along the direction Oz.

14. Device according to claim 13, wherein the consecutive components (Aᵢ; Bᵢ; Cᵢ; Dᵢ; D'ᵢ) are offset at an angle with respect to each other.

15. Device according to claim 13, wherein the components (Aᵢ; Bᵢ; Cᵢ; Dᵢ) which are located in the central part of the flow along the direction Oz, referred to as central components, have an extension along a direction contained in the plane Oxy which is greater than that of the components located at either end of the central components along the direction Oz.

16. Device according to any of claims 1 to 15, wherein the means to modify the velocity distribution comprise a single component (34; 38) forming an obstacle to the flow and comprising an extension along a direction contained in the plane Oxy which is greater in its central part than at either end of said extension in the direction Oz.

17. Device according to claim 1, wherein the component in plate form (80; Eᵢ; 98-104) is roughly perpendicular to the plane Oxz, the fluid flowing in the direction Ox next to the slit (88).

18. Device according to the above claim, wherein the plate (80; Eᵢ; 98-104) forms with the plane Oxy an angle which increases as the surface area of said plate encountered by the fluid flow decreases.
